# EUROPÄISCHE PATENTSCHRIFT

(11) **EP 1 498 586 B1**
(45) Veröffentlichungstag und Bekanntmachung des Hinweises auf die Patenterteilung: **17.08.2005**
(21) Anmeldenummer: 04012518.9
(22) Anmeldetag: 27.05.2004
(51) Int. Cl.: F01N 3/021, F01N 3/033, F01N 3/28

(54) **Abgasreinigungsanordnung einer Abgasanlage einer Brennkraftmaschine eines Nutzfahrzeugs**
Exhaust cleaning arrangement for an internal combustion engine of a commercial vehicle
Disposition d'un système de purification des gaz d'échappement d'un moteur à combustion interne d'un véhicule utilitaire

(30) Priorität: 14.07.2003 DE 10331693
(43) Veröffentlichungstag der Anmeldung: 19.01.2005
(73) Patentinhaber: ROTH-TECHNIK AUSTRIA Gesellschaft m.b.H., 3193 St.Aegyd a.N. (AT)
(72) Erfinder: Mai, Hans-Peter, 76456 Kuppenheim/Oberndorf (DE); Hans Rösinger, 76467 Bietigheim (DE)
(74) Vertreter: Wiedemann, Markus, Dr.

(56) Entgegenhaltungen:
- US-A- 4 269 807
- US-A- 4 462 812
- US-A- 4 709 549

## Beschreibung

### Stand der Technik

Die Erfindung betrifft eine Abgasreinigungsanordnung einer Abgasanlage einer Brennkraftmaschine eines Nutzfahrzeugs, beinhaltend mehrere, von wenigstens einem Einsatzträger eines Gehäuses getragene Abgasreinigungseinsätze, gemäß dem Oberbegriff von Anspruch 1 sowie ein Verfahren zur Herstellung eines solchen Abgasreinigungseinsatzes gemäß Anspruch 13.

Bei bekannten Katalysatoreinrichtungen ist der vom Abgas der Brennkraftmaschine durchströmte Katalysator in einem Katalysatorgehäuse fixiert, wobei der Katalysator üblicherweise durch einen mit einem katalytisch wirksamen Material versehenen Monolithen in keramischer oder metallischer Bauweise gebildet wird. In einer verbreiteten Form wird der Monolith mit einer Lagermatte umwickelt, die die Aufgabe hat, den Monolithen zu lagern. Auf diese Lagermatte wird dann ein Blechmantel gelegt, der mit einer festgelegten Kraft gewickelt wird, wodurch ein fester Sitz des Monolithen erzielt wird. Anschließend wird der gespannte Blechmantel geheftet und mittels einer Schweißnaht verschlossen. Eine weitere, aus dem Stand der Technik bekannte Ausführungsform eines Katalysatorgehäuses, der Schalenkonverter, besteht aus zwei Halbschalen, zwischen welche der mit der Lagermatte umwickelte Monolith eingelegt wird. Zur Fixierung des Katalysators werden die beiden Halbschalen miteinander verschweißt. Eine solche Schweißung kann den Monolithen jedoch gefährden.

Gegenüber Personenkraftwagen ergeben sich bei Nutzfahrzeugen zusätzliche Probleme. Einerseits wird wegen der bei Nutzfahrzeugen höheren Abgasmenge eine wesentlich größeres Katalysator- und Partikelfiltervolumen als bei Personenkraftwagen benötigt. Diesem Problem wird bei beispielsweise aus der DE 101 40 295 A1 oder der DE 102 19 282 A1 bekannten Abgasreinigungsanordnungen dadurch begegnet, dass das Gehäuse mit mehreren Abgasreinigungseinsätzen bestückt ist, welche jeweils einen von einer Lagermatte umhüllten, mit einem katalytisch wirksamen Material versehenen Monolithen oder Partikelfilterkörper beinhalten, welcher in einem endseitig offenen Einsatzgehäuse gehalten ist.

Andererseits sind die bei Personenkraftwagen üblicherweise verwendeten Monolithen in der Regel fester und mechanisch stabiler als die eher brüchigen Vollextrutate, welche in Katalysatoren von Nutzfahrzeugen Anwendung finden. Außerdem weisen die verwendeten Monolithen relativ hohe Toleranzen auf, welche nur durch Verwendung von Lagermatten unterschiedlicher Dicke ausgeglichen werden können. Dies bedingt jedoch eine teure Lagerhaltung und Anfertigung von Lagermatten unterschiedlicher Dicke. Weiterhin müssen die Anschlussmaße des Einsatzträgers für jedes Einsatzgehäuse individuell angepaßt werden, was zu hohen Fertigungskosten führt. Bei Partikelfiltereinrichtungen in Abgasanlagen von Nutzfahrzeugen ergeben sich analoge Probleme.

### Aufgabe der Erfindung

Der Erfindung liegt demgegenüber die Aufgabe zugrunde, eine Abgasreinigungsanordnung der eingangs erwähnten Art derart weiter zu entwickeln, daß sie einfacher und kostengünstiger herstellbar ist. Außerdem soll ihre Verfügbarkeit und Lebensdauer erhöht werden. Schließlich soll ein kostengünstiges Verfahren zur Herstellung eines Abgasreinigungseinsatzes bereitgestellt werden.

Diese Aufgabe wird erfindungsgemäß durch die kennzeichnenden Merkmale von Anspruch 1 und die Merkmale von Anspruch 13 gelöst.

### Vorteile der Erfindung

Indem wenigstens einige der Abgasreinigungseinsätze in Öffnungen des wenigstens einen Einsatzträgers an standardisierten, an der radial äußeren Umfangsfläche der Einsatzgehäuse ausgebildeten Kontaktflächen aufgenommen sind, welche im wesentlichen identische Außenmaße wie beispielsweise einen identischen Außendurchmesser aufweisen, jedoch von den Außenmaßen der an die Kontaktfläche angrenzenden Bereiche des betreffenden Einsatzgehäuses jeweils abweichen, müssen die Öffnungen des Einsatzträgers nicht mehr individuell an den Außendurchmesser des jeweiligen Einsatzes angepaßt sondern können allesamt mit identischem Durchmesser vorgefertigt werden. Dies resultiert in vorteilhaft reduzierten Fertigungskosten.

Ein erfindungsgemäßes Verfahren zur Herstellung eines Abgasreinigungseinsatzes umfasst folgende Schritte:
a) Vermessen zumindest der Außenmaße des von der Lagermatte umhüllten Monolithen oder Partikelfilterkörpers unter Verwendung eines digitalen Verarbeitungssystems,
b) Herstellen eines Einsatzgehäuses mit gegenüber den gemessenen Außenmaßen des von der Lagermatte umhüllten Monolithen oder Partikelfilterkörpers geringfügigen Übermaßen,
c) Einführen des von der Lagermatte umhüllten Monolithen oder Partikelfilterkörpers in das Einsatzgehäuse,
d) Anformen der wenigstens einen Kontaktfläche mit vorbestimmtem Außenmaß,
e) Radiales Komprimieren des Einsatzgehäuses an wenigstens einer von der Kontaktfläche abweichenden Fläche abhängig von den gemessenen Außenmaßen des von der Lagermatte umhüllten Monolithen oder Partikelfilterkörpers, wobei
f) der Verfahrenschritt d) vor dem Verfahrensschritt e) ausgeführt wird oder umgekehrt.

Indem das Einsatzgehäuse abhängig von den gemessenen Außenmaßen des mit der Lagermatte umhüllten Monolithen oder Partikelfilterkörpers vorgefertigt wird, können Schweißvorgänge am Einsatzgehäuse ohne eingesetzten Monolithen bzw. Partikelfilterkörper stattfinden. Dies vermeidet Beschädigungen infolge Schweißeinwirkung. Ergebnis ist folglich ein an den jeweiligen Monolithen bzw. an den jeweiligen Partikelfilterkörper individuell angepaßtes Einsatzgehäuse, welches über die im Außenmaß standardisierte Kontaktfläche mit nur geringen Toleranzen und ohne weitere Anpassungsarbeiten in die zugeordnete Öffnung des vorgefertigten Einsatzträgers einsetzbar ist. Dies sorgt für eine hohe Dichtheit zwischen Einsatzträger und Einsatzgehäuse, so dass kein Abgas an dem Abgasreinigungseinsatz vorbeigeleitet wird. Fallweise kann dann auf teures Dichtschweißen zwischen dem Einsatzträger und dem Einsatzgehäuse mit entsprechendem Schweißverzug verzichtet werden.

Da vor dem Hintergrund der standardisierten Außenmaße der Kontaktflächen der einzelnen Einsatzgehäuse die Toleranzen der Monolithen sekundär sind, können die Extrudierzeiten der Monolithen verkürzt und somit die Fertigungskosten weiter gesenkt werden.

Das erfindungsgemäße Verfahren sorgt wegen der individuellen Anpassung des Einsatzgehäuses an die Lagermatten-Monolith-Baueinheit auch für ein konstantes Spaltmaß zwischen dem Monolithen bzw. dem Partikelfilterkörper und dem Einsatzgehäuse, wodurch in vorteilhafter Weise Lagermatten in nur einer einzigen Stärke zum Einsatz kommen können. Letztlich bewirken die geschilderten Maßnahmen auch, daß bei allen Abgasreinigungseinsätzen der gleiche Druck auf den Monolithen bzw. auf den Rußfilterkörper wirkt.

Durch die in den Unteransprüchen aufgeführten Maßnahmen sind vorteilhafte Weiterbildungen und Verbesserungen der im Patentanspruch 1 angegebenen Erfindung möglich.

Vorzugsweise sind die Abgasreinigungseinsätze über je zwei Kontaktflächen an zwei einen Längsabstand zueinander aufweisenden Innenböden des Gehäuses in Öffnungen gehalten. Durch die Lagerung der Abgasreinigungseinsätze in zwei Innenböden ergibt sich eine sehr steife Anordnung. Zur weiteren Versteifung können wenigstens einige der Einsatzgehäuse mit umlaufenden Sicken versehen sein.

Eine besonders zu bevorzugende Ausführungsform der Erfindung sieht vor, dass die eine Kontaktfläche eine radial äußere, von der Lagermatte durch einen Spalt radial beabstandete Kontaktfläche beinhaltet. Der Spalt zwischen der Lagermatte des Monolithen und der Kontaktfläche sorgt dafür, dass die Lagermatte beim Verschweißen des Einsatzgehäuses mit dem Einsatzträger nicht beschädigt wird, was sich günstig auf die Lebensdauer des Abgasreinigungseinsatzes auswirkt.

Als weitere Kontaktfläche mit standardisierten Außenmaßen wird ein vorzugsweise trichterförmig verengtes Ende des Einsatzgehäuses des Abgasreinigungseinsatzes vorgesehen. Dann können auch sämtliche Öffnungen des der Kontaktfläche zugeordneten Innenbodens mit demselben Durchmesser vorgefertigt werden. Weil die Lagerung der Einsatzgehäuse in den Öffnungen des zugeordneten Innenbodens über die im Durchmesser reduzierten endseitigen Verjüngungen erfolgt, ist an dem betreffenden Innenboden eine größere Stegbreite zwischen den Öffnungen möglich. Die Verjüngungen verleihen den Einsatzgehäusen zudem eine höhere Formsteifigkeit. Nicht zuletzt bieten die trichterförmigen Verjüngungen einen wirksamen Ausblasschutz für Lagermatten gegen den pulsierenden Abgasstrom.

Gemäß einer Weiterbildung der Erfindung sind die Abgasreinigungseinsätze parallel zueinander angeordnet und die Stimflächen koplanar sowie die Einsatzgehäuse und die Öffnungen des Einsatzträgers jeweils zylindrisch ausgebildet.

### Zeichnungen

Ausführungsbeispiele der Erfindung sind in den Zeichnungen dargestellt und in der nachfolgenden Beschreibung näher erläutert. In den Zeichnungen zeigt
- Fig. 1: eine aufgebrochene Seitenansicht eines bevorzugten Ausführungsbeispiels einer Abgasnachbehandlungsanordnung einer Abgasanlage einer Brennkraftmaschine eines Nutzfahrzeugs mit einer Reihe von an Innenböden gehaltenen Abgasreinigungseinsätzen;
- Fig.2: eine Darstellung der an den Innenböden gehaltenen Abgasreinigungseinsätze von Fig.1;
- Fig.3: eine Teilquerschnittsdarstellung eines einzelnen Abgasreinigungseinsatzes von Fig.1;
- Fig.4: eine Teilquerschnittsdarstellung einer weiteren Ausführungsform eines Abgasreinigungseinsatzes;
- Fig.5a - Fig.5g: Querschnittsdarstellungen verschiedener Verbindungen zwischen einem Abgasreinigungseinsatz und einem Innenboden.

### Beschreibung der Ausführungsbeispiele

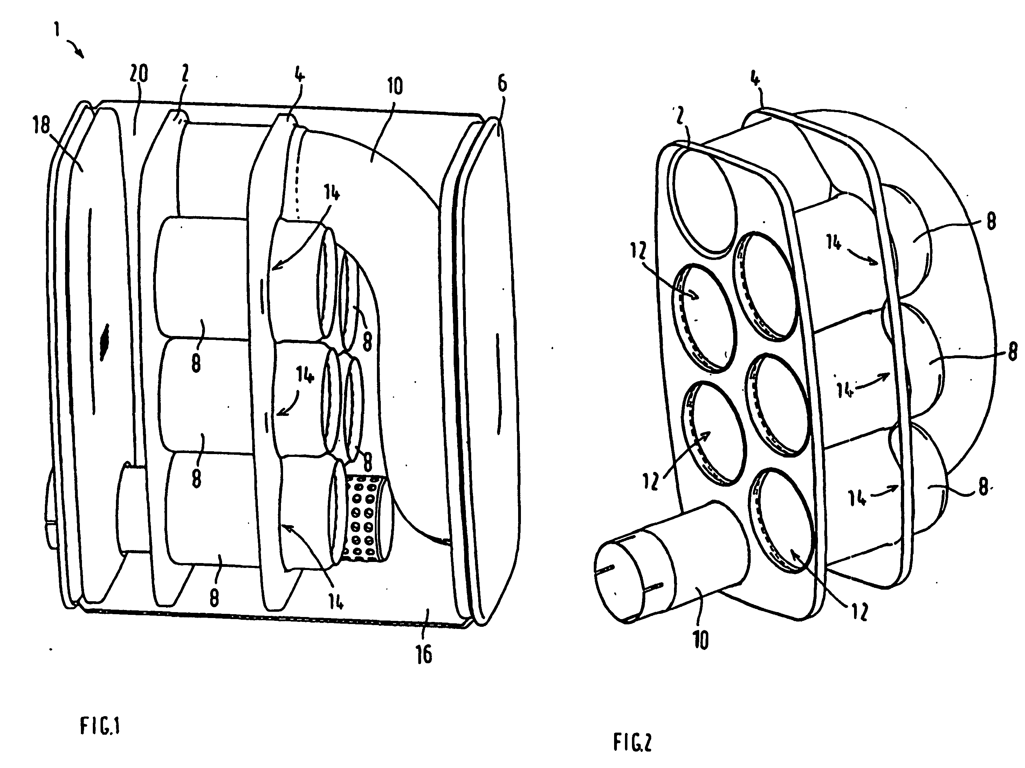

In Fig.1 ist eine bevorzugte Ausführungsform einer Abgasnachbehandlungsanordnung 1 einer Abgasanlage einer Brennkraftmaschine eines Nutzfahrzeugs dargestellt, welche mehrere, von Innenböden 2, 4 eines Gehäuses 6 getragene Abgasreinigungseinsätze 8 oder Katalysatormodule gleichen Aufbaus beinhaltet.

Genauer handelt es sich um ein kombiniertes Abgasreinigungs- und Schalldämpfergehäuse 6, weil dort neben den Abgasreinigungseinsätzen 8 auch abgasführende Rohre 10 untergebracht sind, welche schalldämmende Funktionen ausüben. Wie insbesondere aus Fig.2 hervorgeht, sind die Abgasreinigungseinsätze 8 in koaxialen Öffnungen 12, 14 der beiden Innenböden 2, 4 aufgenommen und parallel zueinander angeordnet, wobei die Stimflächen koplanar sind.

Die Innenböden 2, 4 verlaufen im wesentlichen senkrecht zu einer Mantelwand 16 des Gehäuses 6 und sind an dessen radial innerer Umfangsfläche befestigt, vorzugsweise durch Schweißung. Anstatt zwei Innenböden 2, 4 kann auch nur ein Innenboden oder mehr als zwei Innenböden vorhanden sein. Wie anhand Fig.1 und Fig.2 leicht vorstellbar ist, werden die an beiden Enden offenen Abgasreinigungseinsätze 8 von Abgas durchströmt, welcher über das Abgasrohr 10 in einen dem einen Innenboden 2 und einer Stimwand 18 des Gehäuses 6 zwischengeordneten Raum 20 eingeleitet werden. Dabei dichten die Abgasreinigungseinsätze 8 gegen die Innenböden 2, 4 und Letztere gegen die Mantelwand 16 ab, so dass das gesamte in das Gehäuse 6 eingebrachte Abgas den Weg durch die Abgasnachbehandlungseinsätze 8 nehmen muss.

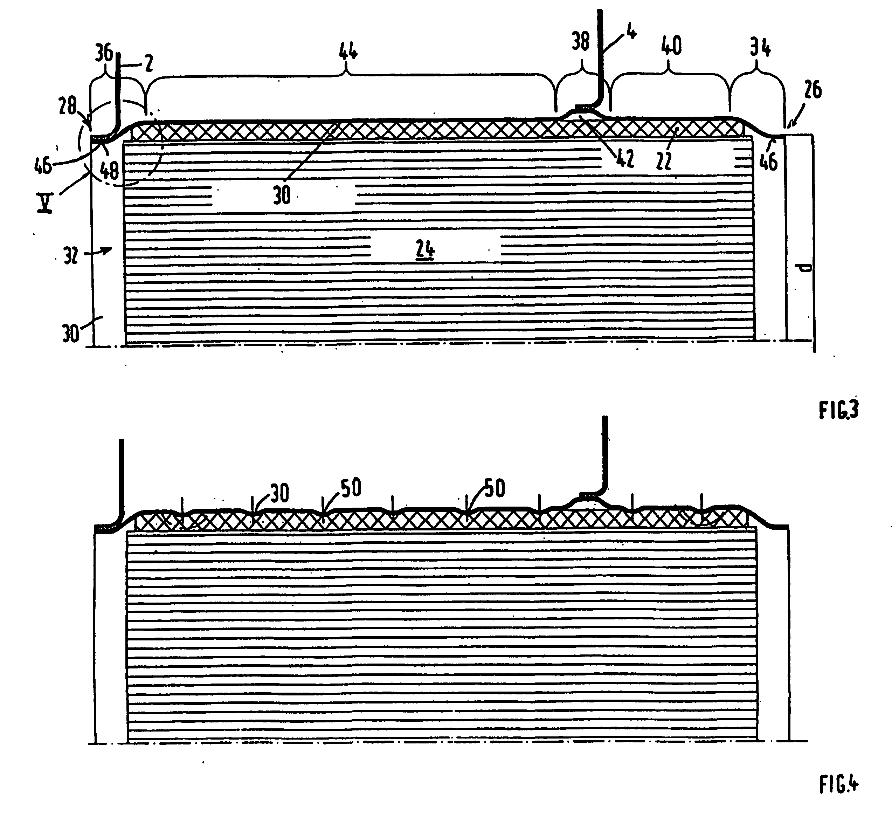

Wie aus Fig.3 hervorgeht, beinhaltet ein Abgasreinigungseinsatz 8 beispielsweise einen von einer Lager- oder Quellmatte 22 umhüllten, mit einem katalytisch wirksamen Material versehenen Monolithen 24, welcher in einem an beiden Enden 26, 28 offenen Einsatzgehäuse 30 gehalten ist. Der Monolith 24 und das Einsatzgehäuse 30 haben eine vorzugsweise zylindrische Form, sie können aber auch jede andere beliebige Form aufweisen, beispielsweise elliptisch oder rechteckförmig.

Ein solcher Abgasreinigungseinsatz 8 wird gemäß der Erfindung vorzugsweise wie folgt hergestellt : Zunächst wird auf den zylindrischen Monolithen 24 die Lagermatte 22 aufgewickelt, vorzugsweise in einer Lage. Dann werden die Außenmaße, im vorliegenden Fall die Länge und der Außendurchmesser der Lagermatten-Monolithen-Baueinheit 32 unter Verwendung eines digitalen Verarbeitungssystems vermessen. Abhängig von den gespeicherten, digitalisierten Maßen wird das

Einsatzgehäuse 30 zunächst als glattzylindrischer Hohlkörper hergestellt, welcher gegenüber der gemessenen Länge und dem gemessenen Außendurchmesser der Lagermatten-Monolithen-Baueinheit 32 jeweils ein geringfügiges Übermaß aufweist, d.h. eine größere Länge und einen größeren Innendurchmesser. Die Herstellung des glattzylindrischen Hohlkörpers erfolgt vorzugsweise durch Rollieren eines Blechmantels mit anschließendem Verschweißen der Längsstoßflächen.

Vorzugsweise mittels eines Montagetrichters wird anschließend die Lagermatten-Monolithen-Baueinheit 32 in das Einsatzgehäuse 30 geschoben und der teilweise montierte Katalysatoreinsatz 8 an einer CNC-gesteuerten Rolliermaschine gespannt, in deren Datenspeicher die digitalisierten Maße der Lagermatten-Monolithen-Baueinheit 32 eingelesen wurden. Mittels der CNC-gesteuerte Rolliermaschine wird dann zunächst an dem einen, die Lagermatten-Monolithen-Baueinheit 32 in Längsrichtung überragenden Ende 26 des Einsatzgehäuses 30 ein trichterförmig verjüngter Anströmschutz 34 für die Lagermatte 22 angeformt, wobei der Kleindurchmesser d des Endes 26 im wesentlichen mit dem Durchmesser eines gedachten, zu diesem Ende 26 hin in Längsrichtung verlängerten Hüllzylinder des Monolithen 24 identisch ist. Hierdurch wird die Lagermatte 22 in Strömungsrichtung des Abgases, d.h. in Längsrichtung des Einsatzgehäuses 30 vor der Abgasströmung abgeschirmt.

Im nächsten Schritt wird ein erster, zwischen dem einen Ende 26 und einem Kontaktabschnitt 38 angeordneter Halteabschnitt 40 des Einsatzgehäuses 30 abhängig von dem gemessenen Außendurchmesser der Lagermatten-Monolithen-Baueinheit 32 radial derart komprimiert, dass durch plastische Verformung des Einsatzgehäuses 30 in diesem Abschnitt eine bleibende Durchmesserreduzierung hervorgerufen wird, durch welche zwischen dem Einsatzgehäuse 30, der Lagermatte 22 und dem Monolithen 24 ein zur Lagefixierung ausreichender Reibschluss entsteht.

Anschließend wird dem Einsatzgehäuse 30 der vorzugsweise schmale, erhabene ringförmig umlaufende Kontaktabschnitt 38 durch die CNC-Rolliermaschine angeformt, welcher vorzugsweise durch einen Spalt 42 von der Lagermatte 22 radial beabstandet ist und einen vorbestimmtem Außendurchmesser aufweist. Wesentlich ist, dass der Außendurchmesser der Kontaktabschnitte 38 der Einsatzgehäuse 30 wenigstens einiger Abgasreinigungseinsätze 8 identisch ist bzw. bezogen auf einen vorbestimmten Solldurchmesser nur geringe Toleranzen aufweist. Der Kontaktabschnitt 38 befindet sich bezogen auf die Längserstreckung des Einsatzgehäuses 30 vorzugsweise in außermittiger Lage.

Dem erhabenen Kontaktabschnitt 38 schließt sich ein wiederum durch radiale Kompression mittels der CNC-Rolliermaschine im Durchmesser reduzierter zweiter Halteabschnitt 44 an, welcher ebenfalls zwischen dem Einsatzgehäuse 30, der Lagermatte 22 und dem Monolithen 24 einen zur Lagefixierung ausreichenden Reibschluss herstellt. Da die Monolithen 24 der einzelnen Abgasreinigungseinsätze 8 toleranzbedingt unterschiedliche Außendurchmesser, die Lagermatten 22 jedoch jeweils vorzugsweise die gleiche Dicke aufweisen, haben die Halteabschnitte 40, 44 der einzelnen Abgasnachbehandlungseinsätze 8 in der Regel unterschiedliche Durchmesser.

Abschließend wird dem anderen Ende 28 des Einsatzgehäuses 30 ebenfalls eine trichterförmige Verjüngung 36 angeformt, welche endseitig vorzugsweise ebenfalls in einen zylindrischen Abschnitt 46 mit dem gleichen Kleindurchmesser d wie an den einen Ende 26 mündet. Wesentlich ist, dass die Kleindurchmesser d der zylindrischen Enden 46 der Verjüngungen 34, 36 der Einsatzgehäuse 30 wenigstens einiger Abgasreinigungseinsätze 8 identisch sind bzw. bezogen auf einen vorbestimmten Solldurchmesser nur geringe Toleranzen aufweisen. Sie bilden dann ebenfalls je einen weiteren Kontaktabschnitt 48.

Wie weiterhin aus Fig.3 hervorgeht, werden die einzelnen Abgasreinigungseinsätze 8 jeweils an dem außermittigen Kontaktabschnitt 38 und an dem verjüngtem Ende 28, 48 durch die beiden Innenböden 2, 4 aufgenommen, welche hierzu mit Durchgangsöffnungen 12, 14 gleichen Durchmessers an dem jeweiligen Innenboden 2, 4 versehen sind. Hingegen haben die beiden, je einen Abgasreinigungseinsatz 8 tragenden Öffnungen 12, 14 in den beiden Innenböden 2, 4 einen unterschiedlichen Durchmesser, sind aber koaxial zueinander angeordnet und ihre Mittelachsen sind allesamt parallel zu einer Längsachse der Abgasreinigungsanordnung 1 angeordnet, so dass so die Abgasreinigungseinsätze 8 im montierten Zustand ebenfalls parallel zueinander sind.

Die Ränder der Durchgangsöffnungen 12, 14 der beiden Innenböden 2, 4 sind vorzugsweise gleichseitig umgebördelt, um eine ebene Kontaktfläche zum jeweiligen Kontaktabschnitt 38, 48 herzustellen. Genauer weisen wenigstens einige und vorzugsweise alle Öffnungen 12, 14 eines Innenbodens 2, 4 im wesentlichen jeweils den gleichen Durchmesser auf, welcher geringfügig größer als der Außendurchmesser des zugeordneten standardisierten Kontaktabschnitts 38, 48 des Einsatzgehäuses 30 ist.

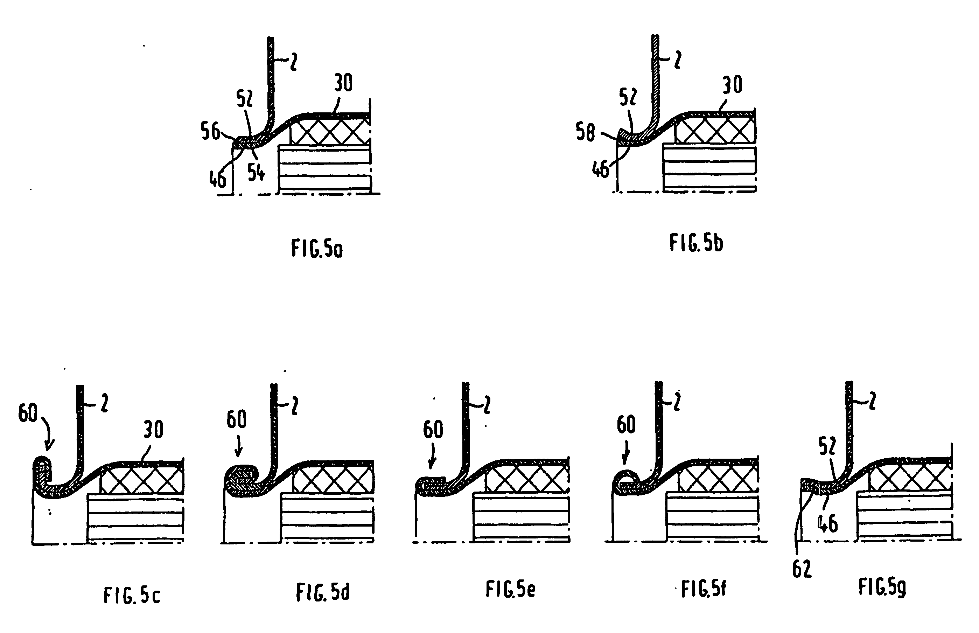

Bei dem weiteren Ausführungsbeispiel der Erfindung nach Fig.4 sind zur Versteifung des Einsatzgehäuses 30 umlaufende Sicken 50 im Bereich des ersten und zweiten Halteabschnitts durch die Rolliermaschine einrolliert worden.

Die Fig.5a bis 5g zeigen verschiedene Möglichkeiten zur Verbindung der radial inneren Bördelfläche 52 der Öffnungen 12 des einen Innenbodens 2 mit dem verjüngten Ende 28 des Einsatzgehäuses 30. Gemäß Fig.5a kontaktiert die ebene Bördelfläche 52 der Öffnung 12 den zylindrischen Abschnitt 46 der Verjüngung 36 des Einsatzgehäuses 30 und ist mit diesem durch Stoffschluß, vorzugsweise durch eine bezogen auf die Kontaktfläche 54 stirnseitige Schweißnaht 56 verschweißt. Die Kontaktfläche 54 bildet dann zugleich eine Dichtfläche aus, welche verhindert, dass Abgas am Abgasreinigungseinsatz 8 vorbeiströmt. Bei gleicher geometrischer Anordnung wie in Fig.5a kann bei dem Ausführungsbeispiel von Fig.5b stimseitig auch eine Lötnaht 58 angebracht werden. Fig.5c bis 5f stellen hingegen Ausführungsbeispiele mit verfalzter Bördelfläche 52 der Öffnung 12 und mit dem zylindrischen Abschnitt 46 der Verjüngung 36 des Einsatzgehäuses 30 dar, wobei die Falze 60 zwei- oder mehrlagig ausgeführt sein können. Die Dichtigkeit der Falze 60 ist meist ausreichend, so dass kein zusätzlicher Stoffschluss mehr notwendig ist. In Fig.5g ist schließlich eine Ausführungsform gezeigt, bei welcher die Verbindungs- und Dichtfunktion durch eine angeformte Stufe 62 in dem doppelwandigen Abschnitt hervorgerufen wird, welcher durch die den zylindrischen Abschnitt 46 der Verjüngung 36 des Einsatzgehäuses 30 überlappende Bördelfläche 52 der Öffnung 12 gebildet wird.

Die Erfindung ist nicht auf Abgasreinigungsanordnungen 1 für gasförmige Schadstoffe beschränkt. Vielmehr kann sie auch bei Partikelfilteranordnungen, insbesondere bei Rußfilteranordnungen angewandt werden, beinhaltend mehrere, von wenigstens einem Einsatzträger eines Filtergehäuses getragene Partikelfiltereinsätze, welche jeweils einen von einer Lagermatte umhüllten Partikelfilterkörper beinhalten, welcher in einem endseitig offenen Einsatzgehäuse gehalten ist. Der Monolith ist dann lediglich durch den Partikelfilterkörper ersetzt, ansonsten ist der Aufbau eines Partikelfiltereinsatzes identisch wie der des beschriebenen Abgasreinigungseinsatzes 8.

## Patentansprüche

1. Abgasreinigungsanordnung (1) einer Abgasanlage einer Brennkraftmaschine eines Nutzfahrzeugs, beinhaltend mehrere, von wenigstens einem Einsatzträger (2, 4) eines Gehäuses (6) getragene Abgasreinigungseinsätze (8), welche wenigstens einen von einer Lagermatte (22) umhüllten, mit einem katalytisch wirksamen Material versehenen Monolithen (24) oder Partikelfilterkörper beinhalten, welcher in einem endseitig offenen Einsatzgehäuse (30) gehalten ist, **dadurch gekennzeichnet, dass** wenigstens einige der Abgasreinigungseinsätze (8) in Öffnungen (12, 14) des wenigstens einen Einsatzträgers (2, 4) an standardisierten, an der radial äußeren Umfangsfläche der Einsatzgehäuse (30) ausgebildeten Kontaktflächen (38, 48) aufgenommen sind, welche im wesentlichen identische Außenmaße wie beispielsweise einen identischen Außendurchmesser aufweisen, jedoch von den Außenmaßen der an die Kontaktfläche (38, 48) angrenzenden Bereiche (40, 44) des betreffenden Einsatzgehäuses (30) jeweils abweichen.

2. Abgasreinigungsanordnung nach Anspruch 1, **dadurch gekennzeichnet, dass** die Kontaktflächen radial äußere, von der Lagermatte (22) durch einen Spalt (42) radial beabstandete Kontaktflächen (38) beinhalten.

3. Abgasreinigungsanordnung nach Anspruch 1 oder Anspruch 2, **dadurch gekennzeichnet, dass** die Kontaktflächen (48) trichterförmig verjüngte Enden (28, 46) der Einsatzgehäuse (30) beinhalten.

4. Abgasreinigungsanordnung nach Anspruch 3, **dadurch gekennzeichnet, dass** die verjüngten Enden (28, 46) der Einsatzgehäuse (30) im wesentlichen den gleichen Durchmesser aufweisen wie die Monolithen (24) oder Partikelfilterkörper.

5. Abgasreinigungsanordnung nach Anspruch 3 oder 4, **dadurch gekennzeichnet, dass** die verjüngten Enden (28, 46) der Einsatzgehäuse (30) mit dem Einsatzträger (2) stoffschlüssig und/oder formschlüssig verbunden sind.

6. Abgasreinigungsanordnung nach einem der vorhergehenden Ansprüche, **dadurch gekennzeichnet, dass** die Abgasreinigungseinsätze (8) parallel zueinander angeordnet und die Stirnflächen koplanar sind.

7. Abgasreinigungsanordnung nach einem der vorhergehenden Ansprüche, **dadurch gekennzeichnet, dass** die Einsatzgehäuse (30) und die Öffnungen (12, 14) des Einsatzträgers (2, 4) zylindrisch ausgebildet sind.

8. Abgasreinigungsanordnung nach wenigstens einem der vorhergehenden Ansprüche, **dadurch gekennzeichnet, dass** der Einsatzträger durch wenigstens einen in dem Gehäuse (6) gehaltenen Innenboden (2, 4) gebildet wird.

9. Abgasreinigungsanordnung nach Anspruch 8, **dadurch gekennzeichnet, dass** die Abgasreinigungseinsätze (8) an wenigstens zwei einen Längsabstand zueinander aufweisenden Innenböden (2, 4) gehalten sind.

10. Abgasreinigungsanordnung nach wenigstens einem der vorhergehenden Ansprüche, **dadurch gekennzeichnet, dass** wenigstens einige der Einsatzgehäuse (30) mit umlaufenden Sicken (50) versehen sind.

11. Abgasreinigungsanordnung nach wenigstens einem der vorhergehenden Ansprüche, **dadurch gekennzeichnet, dass** sie zur Reinigung von gasförmigen Schadstoffen oder zur Partikelfilterung vorgesehen ist.

12. Abgasreinigungsanordnung nach Anspruch 11, **dadurch gekennzeichnet, dass** die Abgasreinigungseinsätze Abgasnachbehandlungseinsätze (8) oder Partikelfiltereinsätze sind.

13. Verfahren zur Herstellung eines Abgasreinigungseinsatzes (8) nach wenigstens einem der Ansprüche 1 bis 12, **gekennzeichnet durch** folgende Schritte:
a) Vermessen zumindest der Außenmaße des von der Lagermatte (22) umhüllten Monolithen (24) oder Partikelfilterkörpers unter Verwendung eines digitalen Verarbeitungssystems,
b) Herstellen eines Einsatzgehäuses (30) mit gegenüber den gemessenen Außenmaßen des von der Lagermatte (22) umhüllten Monolithen (24) oder Partikelfilterkörpers geringfügigen Übermaßen,
c) Einführen des von der Lagermatte (22) umhüllten Monolithen (24) oder Partikelfilterkörpers in das vorgefertigte Einsatzgehäuse (30),
d) Anformen der wenigstens einen Kontaktfläche (38, 48) mit vorbestimmtem Außenmaß,
e) Radiales Komprimieren des Einsatzgehäuses (30) an wenigstens einer von der Kontaktfläche (38, 48) abweichenden Fläche (40, 44) abhängig von den gemessenen Außenmaßen des von der Lagermatte (22) umhüllten Monolithen (24) oder Partikelfilterkörpers, wobei
f) der Verfahrenschritt d) vor dem Verfahrensschritt e) ausgeführt wird oder umgekehrt.

14. Verfahren nach Anspruch 13, **gekennzeichnet durch** das Anformen einer trichterförmigen Verjüngung (34, 36) an wenigstens ein Ende (26, 28) des Einsatzgehäuses (30).

## Claims

1. An exhaust gas purifying assembly (1) of an exhaust system of an internal combustion engine of a commercial vehicle, comprising a plurality of exhaust gas purifying inserts (8) supported by at least one insert carrier (2, 4) of a housing (6), comprising at least one monolith (24) provided with a catalytically effective material, or a particle filter body, surrounded by a housing liner (22) supported in an insert housing (30) open at the end faces, **characterised in that** at least one of the exhaust gas purifying inserts (8) is received in openings (12, 14) of the at least one insert carrier (2, 4) at standardized contacting surfaces (38, 48) formed at the outer circumferential surfaces of the insert housings (30), having essentially identical outer dimensions, such as an identical outer diameter, but differing from the outer dimensions of the areas (40, 44) of each relevant insert housing (30) adjacent to the contacting surface (38, 48).

2. The exhaust gas purifying assembly of claim 1, **characterised in that** the contacting surfaces comprise radially outer contacting surfaces (38) spaced from the housing liner (22) by a gap (42).

3. The exhaust gas purifying assembly of claim 1 or claim 2, **characterised in that** the contacting surfaces (48) comprise funnel-shaped tapering ends (28, 46) of the insert housings (30).

4. The exhaust gas purifying assembly of claim 3, **characterised in that** the tapering ends (28, 46) of the insert housing (30) have essentially the same diameter as the monoliths (24) or particle filter bodies.

5. The exhaust gas purifying assembly of claim 3 or 4, **characterised in that** the tapering ends (28, 46) of the insert housing (30) are metalurgically joined to or positively engaged with the insert carrier (2).

6. The exhaust gas purifying assembly according to any one of the preceding claims, **characterised in that** the exhaust gas purifying inserts (8) are arranged in parallel and with coplanar end faces.

7. The exhaust gas purifying assembly according to any one of the preceding claims, **characterised in that** the insert housings (30) and the openings (12, 14) of the insert carrier (2, 4) are cylindrically formed.

8. The exhaust gas purifying assembly according to at least one of the preceding claims, **characterised in that** the insert carrier is formed by at least one inner wall (2, 4) supported in the housing (6).

9. The exhaust gas purifying assembly according to claim 8, **characterised in that** the exhaust gas purifying inserts (8) are supported at at least two inner walls spaced from each other by a longitudinal distance.

10. The exhaust gas purifying assembly according to at least one of the preceding claims, **characterised in that** at least some of the insert housings (30) are provided with circumferential indentations.

11. The exhaust gas purifying assembly according to at least one of the preceding claims, **characterised in that** it is provided for purifying gaseous pollutants or for particle filtering.

12. The exhaust gas purifying assembly according to claim 11, **characterised in that** the exhaust gas purifying inserts are exhaust gas after-treatment inserts (8) or particle filter inserts.

13. A method of manufacturing an exhaust gas purifying insert (8) according to at least one of claims 1 to 12, **characterised by** the steps of:
a) measuring at least the outer dimensions of the monolith (24) or particle filter body surrounded by the housing liner (22) using a digital processing system,
b) making an insert housing (30) having slightly larger dimensions as compared to the measured outer dimensions of the monolith (24) or particle filter body surrounded by the housing liner (22),
c) inserting the monolith (24) or particle filter body surrounded by the housing liner (22) into the prefabricated insert housing (30),
d) forming the at least one contacting surface (38, 48) having a predetermined outer dimension,
e) radially compressing the insert housing (30) at at least one surface (40, 44) differing from the contacting surfaces (38, 48) depending on the measured outer dimensions of the monolith (24) or particle filter body surrounded by the housing liner (22), wherein
f) process step (d) is carried out before process step e) or vice versa.

14. The method according to claim 13, **characterised by** forming a funnel-shaped taper (34, 36) at at least one end (26, 28) of the insert housing (30).

## Revendications

1. Installation d'épuration des gaz d'échappement d'un moteur à combustion interne d'un véhicule utilitaire contenant plusieurs inserts d'épuration des gaz d'échappement (8), portés par au moins un support d'insert (2, 4) d'un boîtier (6), qui contiennent au moins un monolithe (24) ou un corps de filtre de particules entouré par une natte de palier (22), pourvu d'un matériau efficace catalytiquement, qui est maintenu dans un boîtier d'insert (30) ouvert à une extrémité, **caractérisée en ce qu'**au moins quelques-uns des inserts d'épuration des gaz d'échappement (8) sont logés dans des ouvertures (12, 14) du support d'insert (2, 4) qui existe au moins sur des surfaces de contact (38, 48) standardisées configurées sur la surface périphérique radialement extérieure des boîtiers d'insert (30) qui présentent des dimensions extérieures substantiellement identiques comme par exemple un diamètre extérieur identique, qui cependant diffèrent respectivement des dimensions extérieures des zones (40, 44) adjacentes à la surface de contact (38, 48) du boîtier d'insert concerné (30).

2. Installation d'épuration des gaz d'échappement selon la revendication 1, **caractérisée en ce que** les surfaces de contact contiennent des surfaces de contact extérieures radialement (38) espacées radialement de la natte de palier (22) par une fente (42).

3. Installation d'épuration des gaz d'échappement selon la revendication 1 ou la revendication 2, **caractérisée en ce que** les surfaces de contact (48) contiennent des extrémités effilées en forme d'entonnoir (28, 46) des boîtiers d'insert (30).

4. Installation d'épuration des gaz d'échappement selon la revendication 3, **caractérisée en ce que** les extrémités effilées (28, 46) des boîtiers d'insert (30) présentent substantiellement le même diamètre que les monolithes (24) ou les corps de filtres de particules.

5. Installation d'épuration des gaz d'échappement selon la revendication 3 ou 4, **caractérisée en ce que** les extrémités effilées (28, 46) des boîtiers d'insert (30) sont reliées par engagement de matière et/ou positif avec le support d'insert (2).

6. Installation d'épuration des gaz d'échappement selon l'une des revendications précédentes, **caractérisée en ce que** les inserts d'épuration des gaz d'échappement (8) sont placés parallèles l'un à l'autre et les faces frontales sont coplanaires.

7. Installation d'épuration des gaz d'échappement selon l'une des revendications précédentes, **caractérisée en ce que** les boîtiers d'insert (30) et les ouvertures (12, 14) du support d'insert (2, 4) sont configurées cylindriques.

8. Installation d'épuration des gaz d'échappement selon au moins l'une des revendications précédentes, **caractérisée en ce que** le support d'insert est formé par au moins un fond intérieur (2, 4) maintenu dans le boîtier (6).

9. Installation d'épuration des gaz d'échappement selon la revendication 8, **caractérisée en ce que** les inserts d'épuration des gaz d'échappement (8) sont maintenus sur au moins deux fonds intérieurs (2, 4) qui présentent un écart longitudinal l'un par rapport à l'autre.

10. Installation d'épuration des gaz d'échappement selon au moins l'une des revendications précédentes, **caractérisée en ce qu'**au moins quelques-uns des boîtiers d'insert (30) sont pourvus de moulures périphériques (50).

11. Installation d'épuration des gaz d'échappement selon au moins l'une des revendications précédentes, **caractérisée en ce qu'**elle est prévue pour l'épuration de substances nocives gazeuses ou pour le filtrage de particules.

12. Installation d'épuration des gaz d'échappement selon la revendication 11, **caractérisée en ce que** les inserts d'épuration des gaz d'échappement sont des inserts de traitement postérieur des gaz d'échappement (8) ou des inserts de filtres de particules.

13. Procédé pour la fabrication d'un insert d'épuration des gaz d'échappement selon au moins l'une des revendications 1 à 12, **caractérisé par** les étapes suivantes :
a) mesure d'au moins les dimensions extérieures du monolithe (24) ou du corps de filtre de particules entouré par la natte de palier (22) en utilisant un système de traitement numérique,
b) fabrication d'un boîtier d'insert (30) avec des légères surmesures par rapport aux dimensions extérieures mesurées du monolithe (24) ou du corps de filtre de particules entouré par la natte de palier (22)
c) introduction du monolithe (24) ou du corps de filtre de particules entouré par la natte de palier (22) dans le boîtier d'insert préfabriqué (30),
d) moulage de la surface de contact qui existe au moins (38, 48) avec des dimensions extérieures prédéfinies,
e) compression radiale du boîtier d'insert (30) sur au moins une surface (40, 44) qui diffère de la surface de contact (38, 48) en fonction des dimensions extérieures mesurées du monolithe (24) ou du corps de filtre de particules entouré par la natte de palier (22),
f) l'étape de procédé d) étant réalisée avant l'étape de procédé e) ou vice-versa.

14. Procédé selon la revendication 13, **caractérisé par** le moulage d'un rétrécissement en forme d'entonnoir (34, 36) à au moins une extrémité (26, 28) du boîtier d'insert (30).
